# EUROPÄISCHE PATENTANMELDUNG

(11) **EP 4 759 205 A1**
(43) Veröffentlichungstag der Anmeldung: **17.06.2026**
(21) Anmeldenummer: 24219895.0
(22) Anmeldetag: 13.12.2024
(51) Int. Cl.: A47J 31/44, A47J 31/52, H02J 9/00

(54) **GETRÄNKEAUTOMAT MIT WENIGSTENS EINEM ENERGIESPEICHER, GETRÄNKEAUTOMAT MIT WENIGSTENS EINEM VON EINER HAUPTSTROMVERSORGUNG UNABHÄNGIG BETREIBBAREN ENERGIESPEICHER, VERFAHREN ZUM BETREIBEN EINES GETRÄNKEAUTOMATEN**

(71) Anmelder: JURA ELEKTROAPPARATE AG, 4626 Niederbuchsiten (CH)
(72) Erfinder: REYHANLOO, Shahryar, 6405 Immensee (CH); PAVLESIC, Daniel, 4543 Deitingen (CH)
(74) Vertreter: Mertzlufft-Paufler, Cornelius

(57) **Zusammenfassung**

Die Erfindung schlägt bei einem Getränkeautomaten, insbesondere Kaffeevollautomaten, vor, eine Grundfunktionalität in einem von einer Hauptstromversorgung getrennten Zustand über wenigstens einen Energiespeicher mit elektrischer Energie zu versorgen und/oder den Getränkeautomaten in einem von der Hauptstromversorgung getrennten Betriebsmodus zu überwachen und/oder in einen Modus der Hauptstromversorgung zurückzuversetzen.

## Beschreibung

Die Erfindung betrifft einen Getränkeautomaten, insbesondere Kaffeevollautomaten, mit wenigstens einem Energiespeicher.

Die Erfindung betrifft weiterhin ein Verfahren zum Betreiben eines Getränkeautomaten.

Die Erfindung betrifft schließlich einen Getränkeautomaten, insbesondere Kaffeevollautomat, mit wenigstens einem von einer Hauptstromversorgung unabhängig betreibbaren Energiespeicher und einer aus diesem gespeisten Aufweckvorrichtung.

Der Erfindung liegt die Aufgabe zugrunde, Grundfunktionalitäten eines Getränkeautomaten unabhängig von einer Hauptstromversorgung zu steuern. Unabhängig kann hier beispielsweise bedeuten, dass die Grundfunktionalität nicht nur aktiv, sondern auch passiv von der Hauptstromversorgung mit Energie versorgt werden kann.

Zur Lösung der genannten Aufgabe sind erfindungsgemäß die Merkmale des Anspruchs 1 vorgesehen. Insbesondere wird somit erfindungsgemäß ein Getränkeautomat, insbesondere Kaffeevollautomat, mit wenigstens einem Energiespeicher, der aus einer Hauptstromversorgung mit elektrischer Energie aufladbar ist und der bei getrennter Hauptstromversorgung eine Grundfunktionalität mit elektrischer Energie versorgt, vorgeschlagen.

Dabei kann beispielsweise vorgesehen sein, dass über den wenigstens einen Energiespeicher nach einem Abschalten der Hauptstromversorgung, beispielsweise durch Trennen des Getränkeautomaten vom Stromnetz, weiterhin vorteilhafterweise verschiedene elektrische Schaltelemente derart mit elektrischer Energie versorgt werden können, dass wenigstens eine Grundfunktionalität des Getränkeautomaten ausführbar ist.

Bei der Grundfunktionalität kann es sich beispielsweise um sämtliche Funktionalitäten des Getränkeautomaten handeln, die nicht die Auswahl eines Getränks, beispielsweise eines Kaffees, betreffen und/oder die zu keiner Ausgabe des Getränks führt. Die Grundfunktionalität betrifft demnach elementare Funktionen für den Ablauf des Getränkeautomaten, ohne dass Getränke bezogen werden.

Besonders vorteilhaft kann somit beispielsweise eine Überwachung und/oder Steuerung des Getränkeautomaten im abgeschalteten Zustand erfolgen.

Bei dem Energiespeicher kann es sich beispielsweise um wenigstens einen Kondensator und/oder wenigstens einen Akkumulator handeln. Beispielsweise kann vorgesehen sein, dass zwei Energiespeicher ausgebildet sind, wobei jeder Energiespeicher von einem Kondensator gebildet ist. Dabei kann beispielsweise vorgesehen sein, dass die Kondensatoren unterschiedliche Kapazitäten und/oder unterschiedliche Leistungsaufnahmen und/oder Leistungsabgaben aufweisen. Somit kann beispielsweise vorgesehen sein, dass ein erster Energiespeicher, insbesondere ein Kondensator und/oder Akku, dazu ausgebildet ist, ein Schaltelement, beispielsweise ein Relais und/oder ein Transistor, anzusteuern. Hierbei kann der Energiespeicher beispielweise zu einer vergleichsweise großen Leistungsabgabe eingerichtet sein, insbesondere im Vergleich zu einem zweiten Energiespeicher. Alternativ oder zusätzlich kann ein zweiter, beispielsweise der bereits erwähnte, Energiespeicher, insbesondere ein zweiter Kondensator oder Akku, dazu ausgebildet sein, ein anderes Schaltelement oder Bauelement, beispielsweise eine Echtzeituhr, mit geringerer Leistungsaufnahme anzusteuern. Dies ermöglich beispielsweise einen Energiespeicher zu verwenden, der eine Ladung über einen möglichst langen Zeitraum halten kann.

Besonders vorteilhaft können somit verschiedene Aktionen ausgeführt werden, die als Grundfunktionalität dienen. Jede Grundfunktionalität kann ferner auch in einem Normalbetriebsmodus des Getränkeautomaten, in welchem dieser von der Hauptstromversorgung mit elektrischer Energie versorgt wird, betreibbar sein.

Bei einer weiteren vorteilhaften Ausgestaltung der Erfindung kann vorgesehen sein, dass die Grundfunktionalität eine Uhr hat.

Bei der Uhr kann es sich beispielsweise um eine Echtzeituhr ("Real-time-clock (RTC)") handeln.

Ein besonderer Vorteil ergibt sich dabei insbesondere dadurch, dass, wenn die Uhr, insbesondere die Echtzeituhr, von dem wenigstens einen Energiespeicher bei getrennter Hauptstromversorgung mit elektrischer Energie versorgt wird, eine zeitliche Überwachung des ausgeschalteten Zustands des Getränkeautomaten erfolgen kann. Es kann somit beispielsweise vorgesehen sein, dass Zeitinformationen über eine Dauer des ausgeschalteten Zustands des Getränkeautomaten bereitgestellt werden. Besonders vorteilhaft kann somit beispielsweise eine Empfehlung an einen Nutzer des Getränkeautomaten übermittelt werden, ob beispielsweise Wasser, das sich in einem Wassertank des Getränkeautomaten befindet, aufgrund der zeitlichen Inaktivität vor einem nächsten Bezug eines mit Wasser vermengten Getränks, beispielsweise eines Kaffees, gewechselt werden sollte.

Alternativ oder zusätzlich kann beispielsweise vorgesehen sein, dass der Getränkeautomat mittels der Uhr zu einem vorbestimmten Zeitpunkt in einen Normalbetriebsmodus geschalten wird. Hierbei kann beispielsweise vorgesehen sein, dass, wie bereits beschrieben, vorzugsweise zwei von Kondensatoren gebildete Energiespeicher ausgebildet sind, wobei ein Kondensator in einem von der Hauptstromversorgung getrennten Zustand des Getränkeautomaten zunächst die Uhr, vorzugsweise die Echtzeituhr, betreibt. Der zweite Kondensator kann, sobald ein vorbestimmter Zeitpunkt erreicht ist, anschließend beispielsweise den oder ein Relais und/oder Transistor des Getränkeautomaten schalten, welches den Getränkeautomaten in den oder einen Normalbetriebsmodus überführt. Eine Überführung in den Normalbetriebsmodus des Getränkeautomaten kann vorzugsweise auch dann erfolgen, wenn beispielsweise eine Untergrenze eines Ladezustands eines Energiespeichers erreicht ist, wodurch ein Aufladen des Energiespeichers bewirkt werden kann. Die Untergrenze des Ladezustandes des Energiespeichers kann dabei beispielsweise über eine Halbwertszeitermittlung des Kondensators zeitlich korreliert werden, sodass ein Aktivieren des Normalbetriebmodus des Getränkeautomaten ebenfalls nach einer vorbestimmten Zeitdauer der Inaktivität durch Schalten des oder eines Relais und/oder Transistors erfolgen kann. Besonders vorteilhaft kann somit sichergestellt werden, dass die Energiespeicher nicht entladen werden und die Grundfunktionalität, beispielsweise die Zeitmessung der Inaktivität, zu jeder Zeit sichergestellt ist. Ein Schalten des Relais und/oder des Transistors und das Betreiben der Uhr im inaktiven Zustand und somit im von der Hauptstromversorgung getrennten Zustand kann beispielsweise auch über lediglich einen Energiespeicher erfolgen.

Bei einer weiteren vorteilhaften Ausgestaltung der Erfindung kann vorgesehen sein, dass in der Grundfunktionalität ein Display und/oder eine Heizeinrichtung des Getränkeautomaten deaktiviert ist.

Besonders vorteilhaft kann somit verhindert werden, dass der Energiespeicher Funktionalitäten mit Energie versorgt, die zum Zeitpunkt der getrennten Hauptstromversorgung nicht benötigt werden.

Das Display und/oder die Heizeinrichtung können ferner Bestandteil eines Hauptverbrauchers des Getränkeautomaten sein.

Der Hauptverbraucher des Getränkeautomaten kann dabei sämtliche Funktionen des Getränkeautomaten umfasst, die von einem Bediener an dem Getränkeautomaten zur Ausgabe eines Getränks gewählt werden können. Der Hauptverbraucher kann auch Funktionen zur Erzeugung, Zubereitung und/oder Ausgabe des gewählten Getränks umfassen. Im von der Hauptstromversorgung getrennten Zustand ist der Hauptverbraucher hingegen inaktiv. Hauptverbraucher und Grundfunktionalität sind somit im von der Hauptstromversorgung getrennten Zustand, insbesondere energetisch, getrennt voneinander und bilden gemeinsamen den gesamten Funktionsumfang des Getränkeautomaten. Der Hauptverbraucher befindet sich vorteilhafterweise in dem oder einem, beispielsweise dem bereits beschriebenen, Normalbetriebsmodus des Getränkeautomaten.

Bei einer weiteren vorteilhaften Ausgestaltung der Erfindung kann vorgesehen sein, dass die Grundfunktionalität nicht zur Ausgabe eines Getränks ausgebildet ist und/oder dass in der Grundfunktionalität eine Erzeugung und/oder eine Ausgabe eines Getränks deaktiviert ist.

Wird die Hauptstromversorgung des Getränkeautomaten getrennt, wird der oder ein Hauptverbraucher des Getränkeautomaten, beispielsweise der bereits erwähnte Hauptverbraucher, nicht mehr von dem Hauptstromverbraucher mit elektrischer Energie versorgt.

Vorteilhafterweise wird der Hauptverbraucher im von der Hauptstromversorgung getrennten Zustand demnach auch nicht von dem Energiespeicher mit elektrischer Energie versorgt, so dass verhindert werden kann, dass der Getränkeautomat Getränke im ausgeschalteten Zustand ausgibt und/oder dass Getränke ausgewählt werden können. Wie bereits beschrieben und/oder beansprucht, umfasst die Grundfunktionalität lediglich sämtliche Funktionalitäten des Getränkeautomaten, die nicht die Auswahl und/oder Ausgabe des Getränks betreffen. Dadurch, dass von dem Energiespeicher lediglich Grundfunktionalitäten mit elektrischer Energie versorgt werden, kann/können der/die Energiespeicher mit entsprechend geringer Kapazität und/oder Leistungsaufnahme gewählt werden.

Bei einer weiteren vorteilhaften Ausgestaltung kann die Erfindung vorsehen, dass eine Wechseleinrichtung ausgebildet ist, die einen Übergang von der Grundfunktionalität in einen Normalbetriebsmodus bei Anliegen der Hauptstromversorgung bewirkt.

Die Wechseleinrichtung kann dabei beispielsweise von dem oder einem, beispielsweise dem bereits beschriebenen Relais und/oder Transistor, gebildet sein und/oder dieses beinhalten, wobei das Relais und/oder der Transistor geschalten wird, sobald die Hauptstromversorgung anliegt. Bei dem Normalbetriebsmodus kann es sich um den bereits beschriebenen Normalbetriebsmodus handeln, in welchem der Hauptverbraucher des Getränkeautomaten aktiv ist.

Im Normalbetriebsmodus kann der Energiespeicher vorteilhafterweise erneut aufgeladen werden, die Grundfunktionalität, beispielsweise die bereits beschriebene und/oder beanspruchte Zeitmessung mittels Uhr, insbesondere Echtzeituhr, wird im Normalbetriebsmodus von der Hauptstromversorgung mit elektrischer Energie versorgt. Es kann demnach sichergestellt werden, dass der Energiespeicher durch die Wechseleinrichtung im Normalbetriebsmodus aufgeladen wird und die Grundfunktionalität nicht mit elektrischer Energie versorgt.

Bei einer weiteren vorteilhaften Ausgestaltung der Erfindung kann vorgesehen sein, dass der Energiespeicher wenigstens einen Kondensator, insbesondere einen Doppelschichtkondensator und/oder einen Elektrolytkondensator, aufweist. Ein Beispiel für einen Doppelschichtkondensator ist unter der Bezeichnung "Cold-Cap-Kondensator" bekannt.

Wie bereits beschrieben, kann der Energiespeicher von einem oder mehreren Kondensatoren gebildet sein, wodurch bereits beschriebene Vorteile erreicht werden können. Es können demnach beispielsweise Kondensatoren unterschiedlicher Kapazität und/oder Leistungsaufnahme verwendet werden, die wiederum angepasst sind an die Leistungsaufnahme weiterer Schaltelemente, beispielsweise der oder einer Uhr und/oder des oder eines Relais und/oder Transistors.

Ein Doppelschichtkondensator, der auch Gold-Cap-Kondensator genannt wird, kennzeichnet sich durch einen großen Energiespeicher / eine große Kapazität aus und kann Ladungen besonders lange speichern, kann also geringe Blindströme zulassen. Elektrolytkondensatoren können hingegen aufgenommene Ladung nicht über längere Zeiträume aufrechterhalten, sind aber in der Lage, große Ströme zu liefern, ohne dass eine bereitgestellte Spannung gleich zusammenbricht. Dies ist beispielsweise bei der Ansteuerung von Schaltelementen mit großer Leistungsaufnahme wie Relais von Vorteil.

Bei einer weiteren vorteilhaften Ausgestaltung der Erfindung kann vorgesehen sein, dass bei einer Versorgung der Grundfunktionalität aus dem Energiespeicher ein Wechsel in den Normalbetriebsmodus verhindert ist.

Überaus vorteilhaft kann demnach verhindert werden, dass der oder ein, beispielsweise der bereits beschriebene und/oder beanspruchte, Hauptverbraucher von dem Energiespeicher mit elektrischer Energie versorgt wird. Ferner ist, wie bereits beschrieben und/oder beansprucht, hierdurch die Auswahl und/oder Ausgabe des oder eines Getränks durch die Grundfunktionalität vorteilhafterweise verhindert.

Bei einer weiteren vorteilhaften Ausgestaltung der Erfindung kann vorgesehen sein, dass die Grundfunktionalität eine Steuereinheit umfasst, die ein Ausschalten und/oder ein Einschalten des Getränkeautomaten bewirkt.

Die Steuereinheit kann dabei beispielsweise mit der bereits beschriebenen und/oder beanspruchten Uhr der Grundfunktionalität gekoppelt sein. Besonders vorteilhaft kann somit beispielsweise ein zeitlich abhängiges Ein- und/oder Ausschalten des Getränkeautomaten, insbesondere des oder eines Hauptverbrauchers des Getränkeautomaten, erfolgen.

Alternativ oder zusätzlich sind zur Lösung der genannten Aufgabe erfindungsgemäß die Merkmale des nebengeordneten, auf ein Verfahren gerichteten Anspruchs vorgesehen. Insbesondere wird somit zur Lösung der genannten Aufgabe ein Verfahren zum Betreiben eines Getränkeautomaten, insbesondere Kaffeevollautomat, insbesondere des bereits beschriebenen und/oder beanspruchten Getränkeautomaten, vorgeschlagen, wobei, bevorzugt in einem Normalbetriebsmodus, wenigstens ein Energiespeicher über eine Hauptstromversorgung mit elektrischer Energie geladen wird und bei getrennter Hauptstromversorgung der Energiespeicher eine Grundfunktionalität mit elektrischer Energie versorgt.

Bei den definierten Merkmalen kann es sich um bereits beschriebene und/oder beanspruchte Merkmale handeln, wodurch bereits beschriebene Vorteile erreicht werden können.

Bei einer weiteren vorteilhaften Ausgestaltung der Erfindung kann vorgesehen sein, dass der Getränkeautomat durch Versorgung der Grundfunktionalität mit elektrischer Energie bei getrennter Hauptstromversorgung von einem abgeschalteten Zustand in einen eingeschalteten Zustand oder von einem eingeschalteten Zustand in einen abgeschalteten Zustand überführt werden kann.

Dabei kann beispielsweise vorgesehen sein, dass die Überführung in den eingeschalteten und/oder den abgeschalteten Zustand zeitgesteuert, beispielsweise über die oder eine Uhr, erfolgt. Beispielsweise kann vorgesehen sein, dass der Getränkeautomat nach einer vorbestimmten Zeit und/oder nach Unterschreiten eines Ladezustands des Energiespeichers in den eingeschalteten Zustand, beispielsweise in bereits beschriebener und/oder beanspruchter Art und Weise, überführt wird. Besonders vorteilhaft kann somit beispielsweise eine vollständige Entladung des Energiespeichers im abgeschalteten Zustand verhindert werden. Ferner kann durch ein zeitgesteuertes Einschalten beispielsweise die Ausgabe eines Getränks zu einem vorbestimmten Zeitpunkt initiiert werden, ohne dass der Getränkeautomat zuvor eingeschaltet sein muss. Vorteilhaft kann weiterhin sein, wenn der Getränkeautomat durch Versorgung der Grundfunktionalität von dem eingeschalteten Zustand in den ausgeschalteten Zustand überführt werden kann, beispielsweise dann, wenn seit längerer Zeit kein Bezug eines Getränks erfolgt ist. Hierdurch kann überaus vorteilhaft der Stromverbrauch reduziert werden.

Die Versorgung der Grundfunktionalität kann bei getrennter Hauptstromversorgung über den Energiespeicher und bei verbundener Hauptstromversorgung über die Hauptstromversorgung selbst, beispielsweise über das Stromnetz, erfolgen.

Alternativ oder zusätzlich sind zur Lösung der genannten Aufgabe erfindungsgemäß die Merkmale des nebengeordneten, auf ein Verfahren gerichteten Anspruchs vorgesehen. Insbesondere wird somit zur Lösung der genannten Aufgabe ein Verfahren zum Betreiben eines Getränkeautomaten, insbesondere Kaffeevollautomaten, insbesondere des bereits beschriebenen und/oder beanspruchten Getränkeautomaten oder nach einem bereits beanspruchten Verfahren, vorgeschlagen, wobei in einem von einer Hauptstromversorgung getrennten Betriebsmodus ein mit einem Ladezustand eines Energiespeichers korrelierendes Kriterium überwacht wird, wobei eine Ladeverbindung zur Hauptstromversorgung hergestellt wird, wenn das Kriterium erfüllt ist, wobei der Energiespeicher nach Herstellung der Ladeverbindung aufgeladen wird.

Bei den beschriebenen Merkmalen kann es sich um bereits beschriebene und/oder beanspruchte Merkmale handeln, wodurch bereits beschriebene Vorteile erreicht werden können. Es kann sich somit beispielsweise um die Überwachung des Kriteriums eines oder mehrerer Energiespeicher handeln. Besonders vorteilhaft kann der Getränkeautomat somit Ladezustandsabhängig gesteuert werden. Ferner kann vorteilhafterweise verhindert werden, dass sich der Energiespeicher vollständig entlädt, eine durchgehende elektrische Versorgung, beispielsweise der oder einer, beispielsweise der bereits beschriebenen und/oder beanspruchten, Grundfunktionalität über den Energiespeicher kann folglich gewährleistet werden. Es ist somit möglich die Grundfunktionalität bei getrennter Hauptstromversorgung, beispielsweise in bereits beschriebener und/oder beanspruchter Art und Weise, mit Energie zu versorgen.

Bei dem Energiespeicher kann es sich um wenigstens einen Kondensator und/oder Akkumulator, beispielsweise den bereits beschriebenen Kondensator und/oder Akkumulator, handeln, der/die aufgeladen werden, sobald die Hauptstromversorgung hergestellt ist.

Bei einer weiteren Vorteilhaften Ausgestaltung kann vorgesehen sein, dass das Kriterium ein Unterschreiten eines Schwellwertes für den Ladezustand des Energiespeichers ist.

Besonders vorteilhaft kann die Ladeverbindung von dem Energiespeicher zur Hauptstromversorgung somit dann hergestellt werden, wenn beispielsweise ein zur elektrischen Versorgung der Grundfunktionalität notwendiger Ladezustand des Energiespeichers unterschritten wurde.

Alternativ oder zusätzlich kann vorgesehen sein, dass das Kriterium ein Ablauf einer vorgegebenen Zeitspanne ist.

Besonders vorteilhaft kann dabei sein, wenn hierzu die bereits beschriebene und/oder beanspruchte Uhr der Grundfunktionalität verwendet wird. Ferner ist vorteilhaft, dass hierbei auf eine Messung des Ladezustands verzichtet werden kann.

Alternativ oder zusätzlich kann vorgesehen sein, dass die Ladeverbindung getrennt wird, wenn der Ladezustand des Energiespeichers über den oder einen weiteren Schwellwert steigt.

Beispielsweise kann, neben einem unteren Schwellwert, der den unteren Ladezustand des Energiespeichers repräsentiert, auch ein oberer Schwellwert des Ladezustands festgelegt werden. Ab dem oberen Schwellwert kann die Hauptstromversorgung vorteilhafterweise getrennt werden, da der Ladezustand ausreicht, um die Grundfunktionalität im von der Hauptstromversorgung getrennten Zustand ausreichend mit elektrischer Energie zu versorgen.

Bei einer weiteren vorteilhaften Ausgestaltung der Erfindung kann vorgesehen sein, dass ein Hauptverbraucher bei der Ladeverbindung weiterhin getrennt von der Hauptstromversorgung bleibt.

Bei dem Hauptverbraucher kann es sich um den bereits beschriebenen und/oder beanspruchten Hauptverbraucher handeln. Hierdurch wird vorteilhafterweise ermöglicht, dass die Hauptstromversorgung lediglich zur Aufladung des Energiespeichers, nicht jedoch zum Betreiben des Hauptverbrauchers genutzt wird. Somit kann vorteilhafterweise verhindert werden, dass der Hauptverbraucher während des Ladevorgangs beim Unterschreiten des Schwellwerts, insbesondere dann, wenn der Hauptverbraucher nicht benötigt wird, inaktiv bleibt. Es kann hingegen auch möglich sein, dass der Hauptverbraucher von der Hauptstromversorgung mit elektrischer Energie versorgt wird und dass während des Betriebs des Hauptverbrauchers auch der wenigstens eine Energiespeicher von der Hauptstromversorgung geladen wird.

Alternativ oder zusätzlich sind zur Lösung der genannten Aufgabe erfindungsgemäß die Merkmale des nebengeordneten, auf einen Getränkeautomaten gerichteten Anspruchs vorgesehen. Insbesondere wird somit zur Lösung der genannten Aufgabe ein Getränkeautomat, insbesondere ein Kaffeevollautomat, mit wenigstens einem von einer Hauptstromversorgung unabhängig betreibbaren Energiespeicher und einer aus diesem gespeisten Aufweckvorrichtung vorgeschlagen, wobei die Aufweckvorrichtung zu einem Empfang eines Aufwecksignals und zu einer Herstellung einer Hauptstromversorgung für einen Hauptverbraucher des Getränkeautomaten in Reaktion auf das Aufwecksignal eingerichtet ist.

Bei den Merkmalen kann es sich um bereits beschriebene und/oder beanspruchte Merkmale handeln, wodurch bereits beschriebene Vorteile erreicht werden können. Die Aufweckvorrichtung kann beispielsweise die bereits beschriebene und/oder beanspruchte Wechseleinrichtung und/oder das oder ein Relais und/oder den oder ein Transistor umfassen.

Das Aufwecksignal kann beispielsweise durch das oder ein, beispielsweise durch das bereits beschriebene und/oder beanspruchte, mit dem oder einem Ladezustand korrelierende Kriterium getriggert sein. Somit kann beispielsweise vorgesehen sein, dass die Hauptstromversorgung von der Aufweckvorrichtung aktiviert wird, sobald der Energiespeicher den oder einen Schwellwert des oder eines Ladezustandes unterschritten hat und hierdurch ein Aufwecksignal initiiert wird. Somit kann der Energiespeicher vorteilhafterweise von der Hauptstromversorgung geladen werden, beispielsweise bis der oder ein weiterer Schwellwert, beispielsweise der oder ein oberer Schwellwert, der vorzugsweise einen vollen Ladezustand kennzeichnet, erreicht ist. Da jedoch das Aufladen des Energiespeichers nicht auf einen aktiven Hauptverbraucher angewiesen ist, kann beispielsweise auch vorgesehen sein, dass das Aufwecksignal durch eine Benutzer selbst initiiert wird, beispielsweise über ein mobiles Gerät, welches dazu ausgebildet sein kann, mit dem Getränkeautomaten zu kommunizieren.

Bei einer weiteren vorteilhaften Ausgestaltung der Erfindung kann vorgesehen sein, dass die Aufweckvorrichtung berührungslos ansteuerbar ist.

Berührungslos kann bedeuten, dass die Aufweckvorrichtung nicht händisch bedient werden muss, sondern dass verschiedene vorbestimmte Kriterien automatisch zur Erzeugung eines Aufwecksignals führen. Ein Kriterium kann demnach beispielsweise das bereits beschriebene und/oder beanspruchte Unterschreiten des mit dem Ladezustand korrelierenden Schwellwerts sein. Ferner kann berührungslos bedeuten, dass die Aufweckvorrichtung über das zuvor erwähnte mobile Gerät ansteuerbar ist.

Alternativ oder zusätzlich kann vorgesehen sein, dass das Aufwecksignal von einer Uhr erzeugbar und/oder auslösbar ist.

Bei der Uhr kann es sich um die bereits beschriebene und/oder beanspruchte Uhr, insbesondere Echtzeituhr, handeln. Es kann somit beispielsweise vorgesehen sein, dass das Aufwecksignal erzeugt und die Hauptstromversorgung für den Hauptverbraucher erzeugt wird, sobald beispielsweise von einem Benutzer ein vorbestimmter Zeitpunkt zum Aktivieren eingestellt wurde. Der vorbestimmte Zeitpunkt kann dabei beispielsweise über das mit dem Getränkeautomaten verbindbare, mobile Gerät berührungslos von einem Benutzer eingestellt werden. Besonders vorteilhaft kann somit beispielsweise individuell festgelegt werden, zu welchem Zeitpunkt ein über das mobile Gerät wählbares Getränk ausgegeben werden soll und/oder wann ein Abschalten des Hauptverbrauchers erfolgen soll.

Die Aufweckvorrichtung kann dabei beispielsweise auch ein Steuersignal an eine Hauptsteuerungseinheit des Hauptverbrauchers überliefern, so dass ein nach einem Einschalten eines Getränkeautomaten üblicher Reinigungsvorgang übersprungen werden kann.

Die Erfindung wird nun anhand eines Ausführungsbeispiels näher beschrieben, ist jedoch nicht auf das Ausführungsbeispiel beschränkt. Weitere Ausführungsbeispiele ergeben sich durch Kombination der Merkmale einzelner oder mehrerer Ansprüche untereinander und/oder mit einzelnen oder mehreren Merkmalen des Ausführungsbeispiels.

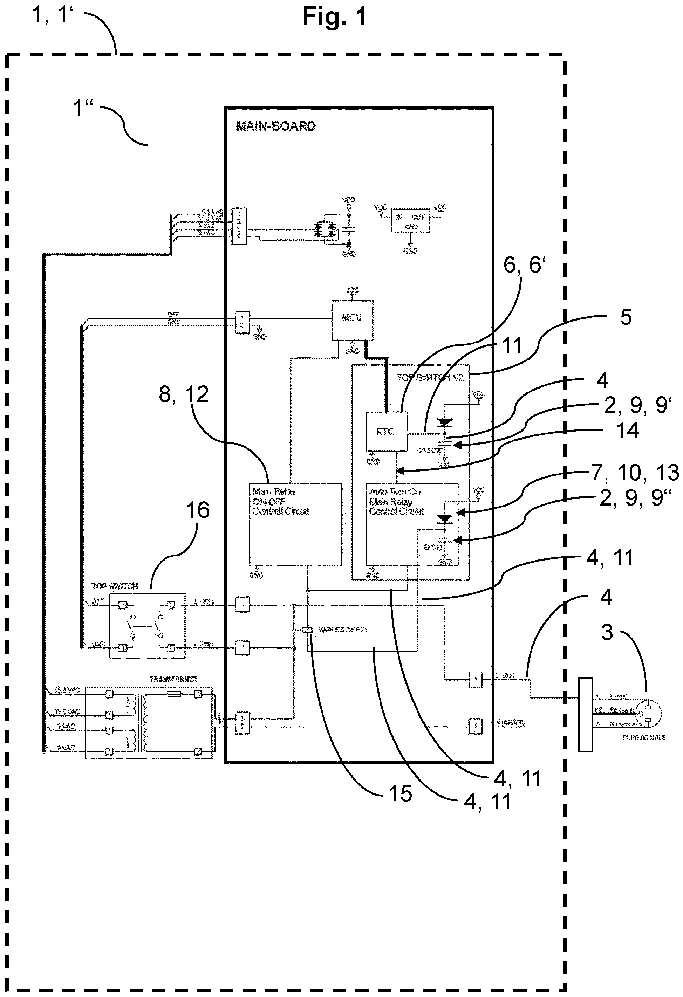

Es zeigt, in jeweils stark vereinfachter Darstellung
- Fig. 1: eine Prinzipdarstellung eines elektrischen Steuerkreislaufs eines Getränkeautomaten.

Fig. 1 zeigt eine Prinzipdarstellung eines elektrischen Steuerkreises 1" eines erfindungsgemäßen Getränkeautomaten 1, der im gezeigten Ausführungsbeispiel als Kaffeevollautomat 1' ausgebildet ist.

Der Getränkeautomat 1 hat im gezeigten Ausführungsbeispiel wenigstens zwei Energiespeicher 2, die über eine Hauptstromversorgung 3 mit elektrischer Energie 4 aufladbar sind und die bei getrennter Hauptstromversorgung 3 eine Grundfunktionalität 5 mit elektrischer Energie 4 versorgt. Die Energiespeicher 2 sind dabei von zwei Kondensatoren 9 gebildet. Die Kondensatoren 9 versorgen im gezeigten Ausführungsbeispiel jeweils eine Uhr 6, die als Echtzeituhr (Real-time-clock) 6' ausgebildet ist, und ein Relais 15 mit elektrischer Energie 4.

In weiteren, nicht gezeigten Ausführungsbeispielen kann auch lediglich ein einziger Kondensator 9 ausgebildet sein. Die Uhr 6 und das Relais 15 sind im gezeigten Ausführungsbeispiel Bestandteil der Grundfunktionalität 5.

Der Kondensator 9, der die Uhr 6 bei getrennter Hauptstromversorgung 3 mit elektrischer Energie versorgt, ist im gezeigten Ausführungsbeispiel als sogenannter Doppelschichtkondensator 9' ausgebildet. Ein solcher Doppelschichtkondensator 9', der beispielsweise auch Gold-cap-Kondensator genannt werden kann, kennzeichnet sich durch einen großen Energiespeicher / eine große Kapazität und durch seine Fähigkeit, eine gespeicherte Ladung über einen langen Zeitraum zu halten, wodurch die Uhr 6, die selbst lediglich eine geringe Leistungszufuhr benötigt, auch im von der Hauptstromversorgung 3 getrennten Zustand über längere Zeit mit elektrischer Energie 4 versorgt werden kann.

Bei dem Kondensator 9, der wiederum das Relais 15 mit elektrischer Energie 4 versorgt, handelt es sich im gezeigten Ausführungsbeispiel um einen Elektrolytkondensator 9", der jedoch, im Gegensatz zum Doppelschichtkondensator 9', seine aufgenommene Kapazität nicht lange erhalten kann, dafür aber einen hohen Strom bereitstellen kann, ohne dass seine Spannung zusammenbricht. Da das Relais 15 angesteuert und geschaltet werden soll, eignet sich dieser Elektrolytkondensator 9" zur Aufrechterhaltung der Grundfunktionalität 5, insbesondere zur Betätigung des Relais 15 im netzlosen Zustand.

Die Versorgung des Relais 15 mit elektrischer Energie 4 über den Elektrolytkondensator 9" und die Versorgung der Uhr 6 mit elektrischer Energie 4 über den Doppelschichtkondensator 9' sind im gezeigten Ausführungsbeispiel Bestandteil der Grundfunktionalität 5 des Getränkeautomaten 1.

Die Grundfunktionalität 5 ist demnach nicht zur Ausgabe eines Getränks ausgebildet. Es ist vielmehr so, dass in der Grundfunktionalität 5 eine Erzeugung und/oder Ausgabe des Getränks deaktiviert ist, da die Kondensatoren 9 keine Komponenten mit elektrischer Energie 4 versorgen, die die Erzeugung und/oder Ausgabe des Getränks initiieren würden. Somit ist in der Grundfunktionalität 5 auch ein in der Abbildung nicht näher dargestelltes Display und/oder eine ebenfalls nicht näher dargestellte Heizeinrichtung deaktiviert.

Fig. 1 zeigt ferner, dass der Getränkeautomat 1 einen Hauptschalter 16 hat, der von einem Benutzer gedrückt werden kann, um den Getränkeautomaten 1 zu aktivieren. Sobald der Benutzer den Hauptschalter 16 gedrückt und losgelassen hat, werden die Kondensatoren 9 über die Hauptstromversorgung 3 geladen. Der Getränkeautomat 1 befindet sich hierbei im Normalbetriebsmodus 8, in welchem die Erzeugung und/oder die Ausgabe des Getränks über einen Hauptverbraucher 12 ermöglicht ist.

Die Uhr 6 wird dabei nicht von dem Doppelschichtkondensator 9', sondern über die Hauptstromversorgung 3 mit elektrischer Energie 4 versorgt. Es ist somit eine kontinuierliche Zeitmessung ermöglicht, unabhängig davon, ob die Hauptstromversorgung 3 getrennt oder nicht getrennt ist.

Auch der Elektrolytkondensator 9" wird im Normalbetriebsmodus 8 von der Hauptstromversorgung 3 aufgeladen. Wie weiter unten näher spezifiziert, sind der Elektrolytkondensator 9" und das Relais 15 im dargestellten Ausführungsbeispiel mit einer Aufweckvorrichtung 13 gekoppelt.

Es kann somit gesagt werden, dass ein Verfahren zum Betreiben eines Getränkeautomaten 1 verwirklicht ist, wobei, zumindest im gezeigten Ausführungsbeispiel, im Normalbetriebsmodus 8 wenigstens ein Energiespeicher 2, hier die Kondensatoren 9, über die Hauptstromversorgung 3 mit elektrischer Energie geladen werden und bei getrennter Hauptstromversorgung 3 die Energiespeicher 2 die Grundfunktionalität 5 mit elektrischer Energie 4 versorgen.

Weiterhin kann der Getränkeautomat 1 mittels des dargestellten Steuerkreises 1" derart betrieben werden, dass in einem von der Hauptstromversorgung 3 getrennten Betriebsmodus ein mit einem Ladezustand, hier des Doppelschichtkondensators 9', korrelierendes Kriterium überwacht wird, wobei eine Ladeverbindung 11 zur Hauptstromversorgung 3 hergestellt wird, wenn das Kriterium erfüllt ist und wobei der Doppelschichtkondensator 9` nach Herstellung der Ladeverbindung 11 aufgeladen wird. Im gezeigten Ausführungsbeispiel ist das Kriterium ein Ablauf einer vorgegebenen Zeitspanne. Sobald die vorgegebene Zeitspanne abgelaufen ist, wird von der Uhr 6 ein Aufwecksignal 14 an die Aufweckvorrichtung 13 gesendet, wodurch wiederum in Reaktion auf das Aufwecksignal 14 die Hauptstromversorgung 3 für den Hauptverbraucher 16 hergestellt wird, der Doppelschichtkondensator 9' und auch der Elektrolytkondensator 9", der das Relais 15 zum Aktivieren der Aufweckvorrichtung 13 geschaltet hat, wird somit erneut aufgeladen. Der Hauptverbraucher 15 kann dabei weiterhin getrennt von der Hauptstromversorgung 3 sein. Im gezeigten Ausführungsbeispiel hat die Aufweckvorrichtung 13 eine Steuereinheit 10 als Bestandteil der Grundfunktionalität 5, die ein Ausschalten und/oder Einschalten des Getränkeautomaten 1, hier des Hauptverbrauchers 15, bewirkt. Der Getränkeautomat 1 kann somit durch Versorgung der Grundfunktionalität 5 bei getrennter Hauptstromversorgung 3 von einem abgeschalteten Zustand in einen eingeschalteten Zustand oder umgekehrt überführt werden.

Bei der Versorgung der Uhr 6 aus dem Doppelschichtkondensator 9' ist ein Wechsel in den Normalbetriebsmodus 8 hingegen verhindert.

In weiteren Ausführungsbeispielen kann das Kriterium ein Unterschreiten eines Schwellwertes für den Ladezustand sein. Alternativ oder zusätzlich kann auch vorgesehen sein, dass die Ladeverbindung 11 getrennt wird, wenn der Ladezustand, hier des Doppelschichtkondensators 9', über den oder einen weiteren Schwellwert steigt.

Die Aufweckvorrichtung 13 ist im gezeigten Ausführungsbeispiel berührungslos ansteuerbar und das Aufwecksignal 14 von der Uhr 6 erzeugbar und auslösbar.

Es kann ferner gesagt werden, dass die Aufweckvorrichtung 13 im gezeigten Ausführungsbeispiel eine Wechseleinrichtung 7, hier die Steuereinheit 10, hat, die einen Übergang von der Grundfunktionalität 5 in den Normalbetriebsmodus 8, auch bei Anliegen der Hauptstromversorgung 3, bewirkt.

Die Erfindung schlägt somit bei einem Getränkeautomaten 1, insbesondere Kaffeevollautomaten 1` vor, eine Grundfunktionalität 5 in einem von einer Hauptstromversorgung 3 getrennten Zustand über wenigstens einen Energiespeicher 2 mit elektrischer Energie 4 zu versorgen und/oder den Getränkeautomaten 1 in einem von der Hauptstromversorgung 3 getrennten Betriebsmodus zu überwachen und/oder in einen Modus der Hauptstromversorgung 3 zurückzuversetzen.

### Bezugszeichenliste

- 1: Getränkeautomat
- 1': Kaffeevollautomat
- 1": Steuerkreis
- 2: Energiespeicher
- 3: Hauptstromversorgung
- 4: elektrische Energie
- 5: Grundfunktionalität
- 6: Uhr
- 6': Echtzeituhr (Real-time-clock)
- 7: Wechseleinrichtung
- 8: Normalbetriebsmodus
- 9: Kondensator
- 9': Doppelschichtkondensator
- 9": Elektrolytkondensator
- 10: Steuereinheit
- 11: Ladeverbindung
- 12: Hauptverbraucher
- 13: Aufweckvorrichtung
- 14: Aufwecksignal
- 15: Relais
- 16: Hauptschalter

## Patentansprüche

1. Getränkeautomat (1), insbesondere Kaffeevollautomat (1'), mit wenigstens einem Energiespeicher (2), der aus einer Hauptstromversorgung (3) mit elektrischer Energie (4) aufladbar ist und der bei getrennter Hauptstromversorgung (3) eine Grundfunktionalität (5) mit elektrischer Energie (4) versorgt.

2. Getränkeautomat (1) nach dem vorangehenden Anspruch, **dadurch gekennzeichnet, dass** die Grundfunktionalität (5) eine Uhr (6) hat.

3. Getränkeautomat (1) nach einem der vorangehenden Ansprüche, **dadurch gekennzeichnet, dass** in der Grundfunktionalität (5) ein Display und/oder eine Heizeinrichtung des Getränkeautomaten (1) deaktiviert ist.

4. Getränkeautomat (1) nach einem der vorangehenden Ansprüche, **dadurch gekennzeichnet, dass** die Grundfunktionalität (5) nicht zur Ausgabe eines Getränks ausgebildet ist und/oder dass in der Grundfunktionalität (5) eine Erzeugung und/oder Ausgabe eines Getränks deaktiviert ist.

5. Getränkeautomat (1) nach einem der vorangehenden Ansprüche, **dadurch gekennzeichnet, dass** eine Wechseleinrichtung (7) ausgebildet ist, die einen Übergang von der Grundfunktionalität (5) in einen Normalbetriebsmodus (8) bei Anliegen der Hauptstromversorgung (3) bewirkt.

6. Getränkeautomat (1) nach einem der vorangehenden Ansprüche, **dadurch gekennzeichnet, dass** der Energiespeicher (2) wenigstens einen Kondensator (9), insbesondere einen Doppelschichtkondensator (9') und/oder einen Elektrolytkondensator (9"), aufweist.

7. Getränkeautomat (1) nach einem der vorangehenden Ansprüche, **dadurch gekennzeichnet, dass** bei einer Versorgung der Grundfunktionalität (5) aus dem Energiespeicher (2) ein Wechsel in den Normalbetriebsmodus (8) verhindert ist.

8. Getränkeautomat (1) nach einem der vorangehenden Ansprüche, **dadurch gekennzeichnet, dass** die Grundfunktionalität (5) eine Steuereinheit (10) umfasst, die ein Ausschalten und/oder ein Einschalten des Getränkeautomaten (1) bewirkt.

9. Verfahren zum Betreiben eines Getränkeautomaten (1), insbesondere Kaffeevollautomaten (1'), insbesondere nach einem der Ansprüche 1 bis 8, wobei, bevorzugt in einem Normalbetriebsmodus (8), wenigstens ein Energiespeicher (2) über eine Hauptstromversorgung (3) mit elektrischer Energie (4) geladen wird und bei getrennter Hauptstromversorgung (3) der Energiespeicher (2) eine Grundfunktionalität (5) mit elektrischer Energie (4) versorgt.

10. Verfahren zum Betreiben eines Getränkeautomaten (1) nach dem vorangehenden Anspruch, **dadurch gekennzeichnet, dass** der Getränkeautomat (1) durch Versorgung der Grundfunktionalität (5) mit elektrischer Energie (4) bei getrennter Hauptstromversorgung (3) von einem abgeschalteten Zustand in einen eingeschalteten Zustand oder von einem eingeschalteten Zustand in einen abgeschalteten Zustand überführt werden kann.

11. Verfahren zum Betreiben eines Getränkeautomaten (1), insbesondere Kaffeevollautomaten (1'), insbesondere nach einem der Ansprüche 1 bis 8 oder nach einem der Ansprüche 9 bis 10, wobei in einem von einer Hauptstromversorgung (3) getrennten Betriebsmodus ein mit einem Ladezustand eines Energiespeichers (2) korrelierendes Kriterium überwacht wird, wobei eine Ladeverbindung (11) zur Hauptstromversorgung (3) hergestellt wird, wenn das Kriterium erfüllt ist, wobei der Energiespeicher (2) nach Herstellung der Ladeverbindung (11) aufgeladen wird.

12. Verfahren nach Anspruch 10 oder 11, **dadurch gekennzeichnet, dass** das Kriterium ein Unterschreiten eines Schwellwertes für den Ladezustand des Energiespeichers (2) und/oder ein Ablauf einer vorgegebenen Zeitspanne ist und/oder dass die Ladeverbindung (11) getrennt wird, wenn der Ladezustand (14) des Energiespeichers (2) über den oder einen weiteren Schwellwert steigt.

13. Verfahren nach einem der Ansprüche 10 bis 12, **dadurch gekennzeichnet, dass** ein Hauptverbraucher (12) bei der Ladeverbindung (11) weiterhin getrennt von der Hauptstromversorgung (3) bleibt.

14. Getränkeautomat (1), insbesondere Kaffeevollautomat (1'), mit wenigstens einem von einer Hauptstromversorgung (3) unabhängig betreibbaren Energiespeicher (2) und einer aus diesem gespeisten Aufweckvorrichtung (13), wobei die Aufweckvorrichtung (13) zu einem Empfang eines Aufwecksignals (14) und zu einer Herstellung einer Hauptstromversorgung (3) für einen Hauptverbraucher (12) des Getränkeautomaten (1) in Reaktion auf das Aufwecksignal (14) eingerichtet ist.

15. Getränkeautomat (1) nach Anspruch 14, **dadurch gekennzeichnet, dass** die Aufweckvorrichtung (13) berührungslos ansteuerbar ist und/oder dass das Aufwecksignal (14) von einer Uhr (6) erzeugbar und/oder auslösbar ist.

## Geänderte Patentansprüche

### Geänderte Patentansprüche gemäss Regel 137(2) EPÜ.

1. Getränkeautomat (1), insbesondere Kaffeevollautomat (1'), mit wenigstens einem Energiespeicher (2), der aus einer Hauptstromversorgung (3) mit elektrischer Energie (4) aufladbar ist und der bei getrennter Hauptstromversorgung (3) eine Grundfunktionalität (5) mit elektrischer Energie (4) versorgt, wobei die Grundfunktionalität (5) eine Uhr hat (6), wobei die Grundfunktionalität (5) eine Steuereinheit (10) umfasst, die ein zeitlich abhängiges Ausschalten und/oder Einschalten des Getränkeautomaten (1) bewirkt.

2. Getränkeautomat (1) nach dem vorangehenden Anspruch, **dadurch gekennzeichnet, dass** in der Grundfunktionalität (5) ein Display und/oder eine Heizeinrichtung des Getränkeautomaten (1) deaktiviert ist.

3. Getränkeautomat (1) nach einem der vorangehenden Ansprüche, **dadurch gekennzeichnet, dass** die Grundfunktionalität (5) nicht zur Ausgabe eines Getränks ausgebildet ist und/oder dass in der Grundfunktionalität (5) eine Erzeugung und/oder Ausgabe eines Getränks deaktiviert ist.

4. Getränkeautomat (1) nach einem der vorangehenden Ansprüche, **dadurch gekennzeichnet, dass** eine Wechseleinrichtung (7) ausgebildet ist, die einen Übergang von der Grundfunktionalität (5) in einen Normalbetriebsmodus (8) bei Anliegen der Hauptstromversorgung (3) bewirkt.

5. Getränkeautomat (1) nach einem der vorangehenden Ansprüche, **dadurch gekennzeichnet, dass** der Energiespeicher (2) wenigstens einen Kondensator (9), insbesondere einen Doppelschichtkondensator (9') und/oder einen Elektrolytkondensator (9''), aufweist.

6. Getränkeautomat (1) nach einem der vorangehenden Ansprüche, **dadurch gekennzeichnet, dass** bei einer Versorgung der Grundfunktionalität (5) aus dem Energiespeicher (2) ein Wechsel in den Normalbetriebsmodus (8) verhindert ist.

7. Verfahren zum Betreiben eines Getränkeautomaten (1), insbesondere Kaffeevollautomaten (1') nach einem der Ansprüche 1 bis 6, wobei, bevorzugt in einem Normalbetriebsmodus (8), wenigstens ein Energiespeicher (2) über eine Hauptstromversorgung (3) mit elektrischer Energie (4) geladen wird und bei getrennter Hauptstromversorgung (3) der Energiespeicher (2) eine Grundfunktionalität (5) mit elektrischer Energie (4) versorgt.

8. Verfahren zum Betreiben eines Getränkeautomaten (1) nach dem vorangehenden Anspruch, **dadurch gekennzeichnet, dass** der Getränkeautomat (1) durch Versorgung der Grundfunktionalität (5) mit elektrischer Energie (4) bei getrennter Hauptstromversorgung (3) von einem abgeschalteten Zustand in einen eingeschalteten Zustand oder von einem eingeschalteten Zustand in einen abgeschalteten Zustand überführt werden kann.

9. Verfahren zum Betreiben eines Getränkeautomaten (1), insbesondere Kaffeevollautomaten (1'), insbesondere nach einem der Ansprüche 1 bis 6 oder nach einem der Ansprüche 7 bis 8, wobei in einem von einer Hauptstromversorgung (3) getrennten Betriebsmodus ein mit einem Ladezustand eines Energiespeichers (2) korrelierendes Kriterium überwacht wird, wobei eine Ladeverbindung (11) zur Hauptstromversorgung (3) hergestellt wird, wenn das Kriterium erfüllt ist, wobei der Energiespeicher (2) nach Herstellung der Ladeverbindung (11) aufgeladen wird.

10. Verfahren nach Anspruch 8 oder 9, **dadurch gekennzeichnet, dass** das Kriterium ein Unterschreiten eines Schwellwertes für den Ladezustand des Energiespeichers (2) und/oder ein Ablauf einer vorgegebenen Zeitspanne ist und/oder dass die Ladeverbindung (11) getrennt wird, wenn der Ladezustand (14) des Energiespeichers (2) über den oder einen weiteren Schwellwert steigt.

11. Verfahren nach einem der Ansprüche 8 bis 10, **dadurch gekennzeichnet, dass** ein Hauptverbraucher (12) bei der Ladeverbindung (11) weiterhin getrennt von der Hauptstromversorgung (3) bleibt.

12. Getränkeautomat (1), insbesondere Kaffeevollautomat (1'), mit wenigstens einem von einer Hauptstromversorgung (3) unabhängig betreibbaren Energiespeicher (2) und einer aus diesem gespeisten Aufweckvorrichtung (13), wobei die Aufweckvorrichtung (13) zu einem Empfang eines Aufwecksignals (14) und zu einer Herstellung einer Hauptstromversorgung (3) für einen Hauptverbraucher (12) des Getränkeautomaten (1) in Reaktion auf das Aufwecksignal (14) eingerichtet ist.

13. Getränkeautomat (1) nach Anspruch 12, **dadurch gekennzeichnet, dass** die Aufweckvorrichtung (13) berührungslos ansteuerbar ist und/oder dass das Aufwecksignal (14) von einer Uhr (6) erzeugbar und/oder auslösbar ist.
